# FASCICULE DE BREVET EUROPEEN

(11) **EP 1 449 092 B1**
(45) Date de publication et mention de la délivrance du brevet: **17.05.2006**
(21) Numéro de dépôt: 02803846.1
(22) Date de dépôt: 28.11.2002
(51) Int. Cl.: G06F 12/14

(54) **PROCEDE DE SECURISATION D UN ACCES A UNE RESSOURCE NUMERIQUE**
VERFAHREN ZUM GESICHERTEN ZUGRIFF ZU EINER DIGITALEN EINRICHTUNG
METHOD FOR MAKING SECURE ACCESS TO A DIGITAL RESOURCE

(30) Priorité: 28.11.2001 FR 0115386
(43) Date de publication de la demande: 25.08.2004
(73) Titulaire: Bouygues Telecom, 92100 Boulogne Billancourt (FR)
(72) Inventeur: PLAGNE, Sylvain, F-92100 Boulogne-Billancourt (FR)
(74) Mandataire: Breese, Pierre
(86) Numéro de dépôt international: PCT/FR2002/004094
(87) Numéro de publication internationale: WO 2003/046730

(56) Documents cités:
- EP-A- 0 677 801
- US-A- 5 608 387
- US-A- 5 928 364
- US-A- 5 949 348
- US-B1- 6 209 104

## Description

La présente invention concerne le domaine de la sécurité informatique par la saisie d'une information personnelle et secrète propre à l'utilisateur référencé, et la comparaison avec le contenu d'une mémoire secrète pour l'autorisation d'accès à un service ou une fonctionnalité.

L'utilisation de mots de passe pour contrôler l'accès aux ressources comme des ordinateurs, des bases de données, des équipements de télécommunications, ou des systèmes de contrôle d'accès est bien connue. Avant de donner l'accès à une ressource demandée, l'utilisateur saisit un mot de passe valable connu normalement seulement de lui et enregistré dans une mémoire du système assurant le contrôle de l'identité entre le mot de passe saisi et le mot de passe enregistré.

Habituellement, le mot de passe est constitué par une séquence de caractères alphanumériques. De tels mots de passe alphanumériques sont difficiles à retenir, en particulier lorsqu'il s'agit d'une séquence de caractères alphanumériques arbitraires. Pour remédier à ce problème, il est fréquent que l'utilisateur choisisse le même mot de passe pour différents équipements (code d'accès à son ordinateur portable, code de son téléphone cellulaire, etc...). Ceci multiplie les risques qu'un tiers malintentionné intercepte ce mot de passe. Il est également fréquent que le mot de passe soit choisi parmi des séquences facilement mémorisables (1234, ABCD, 0000, ou encore date de naissance ou autre séquence facile à deviner), ce qui réduit considérablement la sécurité de telles procédures d'authentification.

À titre d'exemple, on citera la demande de brevet européen EP1022922 qui décrit un procédé d'authentification comportant une étape d'inscription au cours de laquelle l'abonné sélectionne et enregistre un mot de passe sous forme de séquence de caractères et des étapes d'authentification au cours desquels l'utilisateur saisit son mot de passe et le transmet au serveur pour comparaison et validation.

On connaît également la demande PCT WO 113243 qui divulgue un procédé d'identification d'utilisateur qui permet d'identifier un utilisateur abonné d'un service sur un réseau informatique. Ce procédé consiste notamment à demander à l'utilisateur de soumettre un graphique unique, par l'intermédiaire de la page d'informations, au fournisseur de services, ledit graphique comprenant des données intégrées concernant un second mot de passe et à comparer un premier mot soumis avec le second mot de passe extrait, afin de déterminer si une relation prédéfinie existe entre les mots de passe. L'utilisateur se voit accorder le statut d'utilisateur abonné identifié, si la relation prédéfinie existe, puis à lui fournir l'accès audit service.

Les procédures basées sur des mots de passes alphanumériques sont également faciles à casser par l'utilisation d'automates générant toutes les permutations de caractères alphanumériques.

Un autre inconvénient de ces solutions réside dans le fait que la saisie répétée du mot de passe produit une usure des touches de saisie, ce qui rend facile la détection du mot de passe.

Par exemple, le brevet américain US 6 209 104 (JALILI) décrit un procédé permettant à un utilisateur de taper son mot de passe à l'aide de motifs graphiques illustrés à l'écran. Cependant, même si l'étape d'authentification est réalisée de façon graphique, un mot de passe alphanumérique doit quand même être mémorisé et reproduit par l'utilisateur, qui ne s'affranchit donc pas réellement d'un code alphanumérique.

Le brevet EP 0677801 décrit un procédé de sécurisation d'un accès à une ressource numérique depuis un terminal de commande comprenant au moins un clavier de commande comprenant des touches de commandes, ledit procédé comportant :
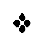 une étape d'apprentissage consistant à sélectionner un authentifiant numérique secret et à l'enregistrer dans une mémoire électronique associée audit terminal de commande, et
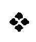 ladite étape d'apprentissage comprenant :
   o une sous-étape d'affichage d'au moins une image ;
   o pour chaque au moins une image, une sous-étape de sélection d'un code graphique consistant à activer au moins une zone de l'image ;
   o une sous-étape d'enregistrement de chaque image et des coordonnées de chaque zone activée pour former ledit authentifiant numérique représentatif dudit code graphique ;
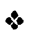 une étape d'authentification consistant à saisir une information numérique et à comparer ladite information numérique saisie au niveau dudit terminal de commande avec ledit authentifiant numérique, ladite étape d'authentification délivrant un signal d'acquittement lorsque ladite comparaison est positive,
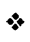 ladite étape d'authentification comprenant :
   o une sous-étape d'affichage d'au moins une image ;
   o une sous-étape de transmission à un calculateur associé audit terminal de ladite information numérique correspondant aux coordonnées de chaque zone activée pour chaque image ;
   o une sous-étape de comparaison consistant pour le calculateur, à délivrer ledit signal d'acquittement lorsque ledit authentifiant numérique correspond à ladite information numérique transmise audit calculateur.

Cette solution n'est pas non plus satisfaisante, car elle nécessite l'utilisation d'un dispositif de pointage, et implique la manipulation d'objets graphiques nécessitant des mémoires suffisantes, et des débits importants pour permettre la transmission de ces objets graphiques dans le cas où ils seraient enregistrés sur un serveur.

Cette solution possède également l'inconvénient d'être difficile d'usage puisque l'utilisateur doit sélectionner précisément une même zone d'une image dans une phase d'apprentissage et dans une phase d'authentification, ce qui peut créer des erreurs de manipulation empêchant l'accès aux ressources sécurisées.

Le but de la présente invention est de remédier à ces inconvénients en proposant un procédé de sécurisation d'un accès à une ressource, notamment à une ressource informatique ou de télécommunication, conciliant un haut degré de sécurité et une utilisation plus commode.

Ce but est atteint par un procédé sécurisation d'un accès à une ressource selon la revendication 1.

En effet, en corrélant la matrice d'éléments graphiques avec par exemple les touches d'un clavier d'un téléphone, l'apprentissage et l'authentification pour l'entrée d'un code graphique secret sont facilités.

La présentation aléatoire des éléments graphiques ajoute également un surcroît de sécurité.

D'autres avantages sont illustrés dans les revendications dépendantes.

Selon un mode de réalisation avantageux, l'authentifiant est constitué par une séquence d'identifiants de motifs, lesdits motifs étant organisés sous forme d'une matrice corrélée avec la répartition des touches d'un clavier.

Ce mode de réalisation permet la mise en oeuvre sur des équipements tels que des téléphones portables, dont l'écran présente une définition relativement faible.

De préférence, chaque tableau comporte 3xL motifs associés à 3L identifiants, L étant compris 1 et 5, et de préférence égal à 3 ou à 4. Ce mode de mise en oeuvre est particulièrement adapté à la désignation du motif par l'action sur la touche d'un clavier destiné à la composition d'un numéro de téléphone. Il s'agit d'une alternative à l'utilisation d'un écran tactile.

Selon une variante particulière de mise en oeuvre, le procédé comporte une étape de personnalisation comprenant une étape de visualisation de N tableaux issus d'une bibliothèque de M tableaux, chaque tableau étant décomposé en P motifs, chaque tableau étant associé à un identifiant Tᵢ et chaque motif étant associé à un identifiant M_{Ti,j}, une étape d'enregistrement d'au moins un identifiant M_{Ti,j} sélectionné par activation d'une touche associée au motif correspondant, et une étape d'enregistrement d'un authentifiant comprenant les identifiants des tableaux et motifs sélectionnés, l'étape d'authentification comportant une étape de visualisation d'une partie P au moins desdits N tableaux, d'enregistrement d'une information correspondant à la touche associée à un motif de chaque tableau activé par l'utilisateur, et à comparer ladite information avec l'authentifiant enregistré lors de l'étape de personnalisation.

De préférence, P est inférieur à N.

Selon un mode de réalisation préféré, l'ordre de visualisation des P tableaux est aléatoire.

De préférence, le dispositif des motifs M_{Ti,j} d'un tableau Tᵢ est aléatoire.

Selon un mode de réalisation particulier, le procédé comporte une étape d'enregistrement dans la mémoire d'un équipement client d'une bibliothèque de tableaux numériques.

Selon une variante préférée, comporte une étape de téléchargement depuis une mémoire d'un serveur comprenant une bibliothèque de M tableaux, d'un sous-ensemble de N tableaux numériques dans la mémoire d'un équipement client.

Selon une autre variante, il comporte une étape de transmission sécurisée des identifiants M_{Ti,j} des motifs désignés par l'utilisateur sur un équipement client à un serveur, les traitements d'enregistrement de l'authentifiant et de comparaison étant réalisées sur le serveur.

L'invention concerne également un système comprenant au moins un équipement individuel et un serveur d'authentification pour l'accès conditionnel à un service numérique caractérisé en ce que le serveur d'authentification comprend une mémoire pour l'enregistrement d'une bibliothèque de tableaux numériques formés d'une pluralité de motifs et une mémoire sécurisée pour l'enregistrement des authentifiants des utilisateurs autorisés, les équipements individuels comportent une mémoire pour l'enregistrement d'une bibliothèque de tableaux numériques, le système comportant des moyens d'échanges d'identifiants des motifs pour les étapes de personnalisation de l'authentifiant et de vérification de l'autorisation d'un utilisateur.

Un tel système est destiné à la mise en oeuvre du procédé susvisé à partir d'un serveur d'authentification exploité par une pluralité d'équipements clients, par exemple des téléphones portables.

L'invention concerne également un équipement individuel pour l'accès conditionnel à un service numérique caractérisé en ce qu'il comprend une mémoire pour l'enregistrement d'une bibliothèque de tableaux numériques formés d'une pluralité de motifs et une mémoire sécurisée pour l'enregistrement des authentifiants des utilisateurs autorisés, ainsi qu'une mémoire pour l'enregistrement d'une bibliothèque de tableaux numériques, le système comportant des moyens d'échanges d'identifiants des motifs pour les étapes de personnalisation de l'authentifiant et de vérification de l'autorisation d'un utilisateur.

Un tel système est destiné à la mise en oeuvre du procédé susvisé localement, à partir équipements clients, par exemple des téléphones portables ou un micro-ordinateur ou encore un assistant personnel (PDA). La présente invention sera mieux comprise à la lecture de la description d'un exemple non limitatif de réalisation, faisant référence aux dessins annexés où :

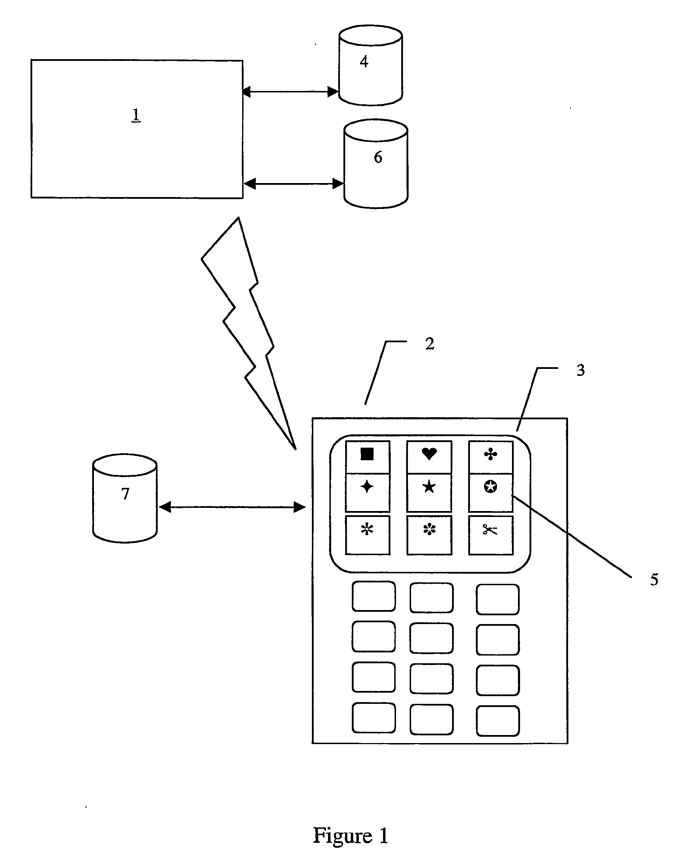

- la figure 1 représente une vue schématique d'un système pour la mise en oeuvre de l'invention.

La description qui suit concerne le mode d'utilisation « distant » du procédé.

Selon un mode particulier de réalisation, le procédé consiste en une étape préalable, dite d'apprentissage, et une étape d'utilisation normale.

L'étape préalable permet à l'utilisateur de choisir un certain nombre de tableaux de motifs.

Le serveur d'authentification (1) transmet à un équipement (2), par exemple un téléphone cellulaire, un premier fichier sous la forme de données numériques (dans le bloc « data » du paquet de commande conforme à la norme GSM 03.48 si l'invention exploite les possibilités de la carte SIM; Dans le cas où la carte SIM n'est pas utilisée, on se référera aux normes appropriées telles que GSM DATA CSD et GPRS). Ce fichier correspond aux éléments graphiques permettant l'affichage sur l'écran (3) d'un tableau extrait parmi une pluralité de tableaux provenant d'une bibliothèque enregistrée dans une mémoire (4) du serveur. Ce tableau est décomposé en 9 éléments graphiques (5) formés de pictogrammes, ou de dessins symboliques (panneaux du code de la route, symboles chimiques, signes du zodiaque,...).

L'utilisateur peut accepter ou refuser un tableau visualisé en activant une commande par une touche de son téléphone, par exemple la touche de validation utilisée habituellement pour le défilement du menu, ou encore une touche de fonction du téléphone.

En cas de refus, le serveur transmet un nouveau fichier correspondant à un nouveau tableau issu de la bibliothèque de tableaux.

En cas d'acceptation, il enregistre l'identifiant du tableau dans une mémoire (6) comprenant une table associée à chacun des utilisateurs référencés.

Par ailleurs, le fichier sera enregistré dans une mémoire locale (7) de façon à permettre, lors des échanges suivants entre le serveur (1) et l'équipement (2), la transmission du seul identifiant du tableau et non pas le fichier graphique complet.

Pour chacun des tableaux choisis, l'utilisateur doit préciser lequel des motifs il sélectionnera à l'avenir lors des demandes d'authentification. Par exemple si chaque tableau est constitué de 9 motifs, l'utilisateur précise lequel des 9 motifs il a mémorisé.

Cette information est transmise au serveur sous la forme de l'identifiant du motif sélectionné, et est enregistré dans la table susvisée.

La procédure d'enregistrement comporte par exemple l'enregistrement de 4 identifiants de motifs provenant de 4 tableaux différents. Le serveur d'identification dispose donc pour chaque utilisateur référencé les informations nécessaires pour vérifier son code d'accès, et éventuellement pour générer un signal d'autorisation pour l'activation d'un service associé.

La procédure d'apprentissage met en oeuvre dans l'exemple décrit l'équipement à sécuriser.

Selon des modes particuliers de réalisation, cette étape d'apprentissage peut se faire sur un site Internet, par téléphone, par courrier (l'utilisateur signale les tableaux et réponses choisies, et un opérateur se chargera de saisir les résultats), ou autre.

A l'issue de cette étape personnalisation par apprentissage, les motifs préférés et les tableaux sélectionnés par l'utilisateur sont enregistrés dans un serveur informatique, dit « serveur d'authentification ».

Lors des tentatives de connexion distante ultérieure, l'utilisateur se verra présenter sur l'écran de son terminal tout ou partie des tableaux qu'il aura sélectionnés. Pour chacun des tableaux, il doit appuyer sur la touche de son terminal correspondant à la réponse qu'il avait donnée en phase d'apprentissage.

A l'issue de cette phase, les réponses sont envoyées au serveur d'authentification. Si elles correspondent aux réponses enregistrées en phase d'apprentissage, l'utilisateur est authentifié. Dans le cas contraire l'authentification a échoué (selon des modes particuliers de réalisation, on pourra autoriser un certain nombre de tentatives).

On peut résumer les 2 étapes par les algorithmes suivants :

### Etape d'apprentissage et de personnalisation

1. Choisir n tableaux parmi m
2. Pour chaque tableau i choisi et demander à l'utilisateur le motif préféré réponse [i]
3. Enregistrer la liste des tableaux et réponses choisies

### Etape d'authentification

1. Serveur d'authentification choisit aléatoirement p tableaux parmi les n sélectionnés par l'utilisateur, dans un ordre aléatoire lui aussi
2. Pour chaque tableau demander à l'utilisateur le motif préféré réponse [i]
3. Comparer les réponses données aux réponses préenregistrées
4. Afficher le résultat de l'authentification

On peut schématiser l'infrastructure utilisée de la façon suivante :

Différents protocoles peuvent être utilisés pour l'authentification de l'utilisateur, mais un mode particulier de réalisation consiste à utiliser le protocole WAP.

Le protocole WAP, normalisé par le WAPFORUM, permet d'afficher des images sur l'écran d'un terminal mobile, et de soumettre des requêtes à l'utilisateur. Les réponses à ces requêtes constituent ici la combinaison des touches enfoncées par l'utilisateur.

D'autres protocoles peuvent être utilisés, en fonction des capacités du terminal utilisé : protocoles http, messages SMS, EMS ou MMS etc.

Pendant la procédure d'authentification, la présentation des tableaux peut être aléatoire, de même que l'ordre des motifs dans un tableau. L'envoi dans un ordre aléatoire des tableaux est commandé par le serveur, par l'envoi d'identifiants de tableaux sélectionnés pendant la phase de personnalisation dans un ordre quelconque.

La position des motifs dans un tableau peut être aléatoire, la sélection d'un motif déclenchant l'envoi de l'identifiant correspondant quelle que soit la position dans le tableau.

L'invention peut aussi être mise en oeuvre localement. Dans ce cas, les tableaux sont enregistrés uniquement dans une mémoire locale, et la comparaison entre les motifs sélectionnés et les motifs enregistrés pendant l'étape de personnalisation est également réalisée localement.

## Revendications

1. procédé de sécurisation d'un accès à une ressource numérique depuis un terminal de commande comprenant au moins un clavier de commande comprenant des touches de commandes, ledit procédé comportant :
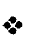 une étape d'apprentissage consistant à sélectionner un authentifiant numérique secret et à l'enregistrer dans une mémoire électronique associée audit terminal de commande, et
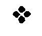 ladite étape d'apprentissage comprenant :
o une sous-étape d'affichage d'au moins un tableau comprenant chacun une pluralité d'éléments graphiques disposés selon une matrice corrélée avec la répartition des touches dudit clavier de commande;
o pour chaque au moins un tableau, une sous-étape de sélection d'un code graphique consistant à activer au moins une touche de commande dudit clavier de commande associée chacune à un élément graphique;
o une sous-étape d'enregistrement d'un identifiant d'apprentissage de chaque tableau et de chaque au moins un identifiant numérique d'apprentissage dudit élément graphique associé à ladite touche de commande activée à la sous-étape de sélection pour chaque tableau, dans ladite mémoire électronique, pour former ledit authentifiant numérique représentatif dudit code graphique ;
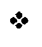 une étape d'authentification consistant à saisir une information numérique et à comparer ladite information numérique saisie au niveau dudit terminal de commande avec ledit authentifiant numérique, ladite étape d'authentification délivrant un signal d'acquittement lorsque ladite comparaison est positive,
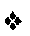 ladite étape d'authentification comprenant :
o une sous-étape d'affichage au niveau dudit terminal, d'au moins dudit au moins un tableau comprenant ladite pluralité d'éléments graphiques, la disposition desdits éléments graphiques au sein dudit tableau étant aléatoire ;
o une sous-étape de transmission à un calculateur associé audit terminal de ladite information numérique correspondant à au moins un identifiant numérique d'un élément graphique désigné par un utilisateur par activation de la touche de commande associée audit élément graphique pour chaque tableau ;
o une sous-étape de comparaison consistant pour le calculateur, à délivrer ledit signal d'acquittement lorsque ledit au moins un identifiant numérique d'apprentissage correspond à ladite information numérique transmise audit calculateur.

2. Procédé selon la revendication 1, dans lequel chacun desdits au moins un tableau comprend 3x L éléments graphiques, L étant compris entre 1 et 5.

3. Procédé selon la revendication 1, dans lequel chacun desdits au moins un tableau comprend 3× L éléments graphiques, L étant égal à 3 ou 4.

4. Procédé selon la revendication 1, dans lequel :
ladite sous-étape d'affichage de ladite étape d'apprentissage comprend une étape consistant à :
- choisir N tableaux issus d'une bibliothèque de M matrices graphiques, chaque tableau étant décomposé en P éléments graphiques, chaque tableau étant associé à un identifiant d'apprentissage de tableau Tᵢ, chaque élément graphique de chacun desdits tableau étant associé à un identifiant d'apprentissage d'élément graphique M_{τi,j},
dans lequel, lors de ladite étape d'enregistrement, ledit authentifiant numérique est formé en outre par lesdits identifiants d'apprentissage de tableau Tᵢ associés auxdits éléments graphiques sélectionnés lors de ladite sous-étape de sélection d'un code graphique ;
et dans lequel ladite étape d'authentification comprenant une étape consistant à :
- Afficher une partie P au moins desdits N tableaux.

5. Procédé selon la revendication 4 dans lequel P est inférieur à N.

6. Procédé selon la revendication 4 ou 5 dans lequel l'ordre d'affichage de ladite partie P au moins desdits N tableaux est aléatoire.

7. Procédé selon l'une quelconque des revendications précédentes dans lequel ladite sous-étape d'enregistrement de ladite étape d'apprentissage est réalisée sur un serveur distant dudit terminal de commande de façon sécurisé, ladite sous-étape de comparaison étant également réalisée au niveau dudit serveur.

## Claims

1. Security method for an access to a digital resource from a control terminal comprising at least one control keyboard containing control keys, the said method including:
- a learning step consisting of selecting a secret digital authenticator and recording it in an electronic memory associated with the said control terminal, and
- the said learning step including:
- a sub-step to display at least one table, each table comprising a plurality of graphic elements arranged in the form of a matrix correlated with the distribution of keys on the said control keyboard;
- for each at least one table, a sub-step to select a graphic code consisting of activating at least one control key of the said control keyboard, each associated with a graphic element;
- a sub-step to record a learning identifier for each table and each at least one numeric learning identifier of the said graphic element associated with the said control key activated in the selection sub-step for each table in the said electronic memory, to form the said digital authenticator representative of the said graphic code;
- An authentication step consisting of inputting numeric information and comparing the said numeric information input on the said control terminal with the said numeric authenticator, the said authentication step outputting an acknowledgement signal when the said comparison is positive,
- the said authentication step including:
- a sub-step to display the said at least one table containing the said plurality of graphic elements on the said terminal, the arrangement of the said graphic elements within the said table being random;
- a sub-step to transmit the said numeric information corresponding to at least one numeric identifier of a graphic element designated by a user using the control key associated with the said graphic element for each table, to a computer associated with the said terminal;
- a comparison sub-step in which the computer outputs the said acknowledgement signal when the said at least one numeric learning identifier corresponds to the said numeric information transmitted to the said computer.

2. Method according to claim 1, in which the said table or each of the said tables comprises 3xL graphic elements, where L is between 1 and 5.

3. Method according to claim 1, in which the said table or each of the said tables comprises 3xL graphic elements, where L is equal to 3 or 4.

4. Method according to claim 1, in which:
the said sub-step to display the said learning step includes a step consisting of:
- choosing N tables output from a library of M graphic matrices, each table being broken down into P graphic elements, each table being associated with a table learning identifier Tᵢ, each graphic element in each of the said tables being associated with a learning identifier of the graphic element M_{ti.j},
in which during the said recording step, the said numeric authenticator is also formed by the said table learning identifiers Ti associated with the said graphic elements selected during the said graphic code selection sub-step;
and in which the said authentication step includes a step consisting of:
- displaying at least a part P of the said N tables.

5. Method according to claim 4 in which P is less than N.

6. Method according to claim 4 or 5 in which the display order of the said part P of at least the said N tables is random.

7. Method according to any one of the previous claims in which the said sub-step to record the said learning step is performed on a server remote from the said control terminal in a secure manner, the said comparison sub-step also being performed on the said server.

## Patentansprüche

1. Verfahren zur Sicherung eines Zugriffs auf ein digitales Betriebsmittel von einem Steuerterminal aus, das mindestens eine Steuertastatur mit Steuertasten aufweist, wobei das besagte Verfahren Folgendes umfasst:
- eine Lernstufe, die aus der Auswahl eines geheimen digitalen Authentifizierers besteht und der Speicherung in einem elektronischen Speicher, der mit dem besagten Steuerterminal verbunden ist und
- wobei die besagte Lernstufe Folgendes umfasst:
- eine Unterstufe zur Anzeige von mindestens einer Tabelle mit einer Vielzahl von Grafikelementen, die gemäß einer Matrix angeordnet sind, die mit der Verteilung der Tasten der besagten Steuertastatur verbunden ist;
- für jede mindestens eine Tabelle, eine Unterstufe zur Auswahl eines Grafikcodes, der in der Aktivierung von mindestens einer Steuertaste der besagten Steuertastatur besteht, die jeweils mit einem Grafikelement verbunden ist;
- eine Unterstufe zur Speicherung eines Benutzeridentifizierers zum Lernen jeder Tabelle und für jeden mindestens einen digitalen Benutzeridentifizierers zum Lernen des besagten Grafikelementes, das mit der besagten Steuertaste verbunden ist, die in der Unterstufe zur Auswahl für jede Tabelle aktiviert ist, in dem besagten elektronischen Speicher, um den besagten digitalen Authentifizierer zu bilden, der für den besagten Grafikcode typisch ist;
- eine Stufe zur Authentifizierung, die in der Erfassung einer digitalen Information besteht und in dem Vergleich der besagten digitalen Information, die im Bereich des besagten Steuerterminals mit dem besagten digitalen Authentifizierer erfasst wurde, wobei die besagten Authentifizierungsstufe ein Quittierungssignal liefert, wenn der besagte Vergleich positiv ist,
- die besagte Authentifizierungsstufe umfasst Folgendes:
- mindestens eine Unterstufe zur Anzeige im Bereich des besagten Terminals von dem mindestens eine Tabelle die besagte Vielzahl grafischer Elemente umfasst, wobei die Anordnung der besagten Grafikelemente innerhalb dieser Tabelle zufallsbedingt ist;
- eine Unterstufe zur Übertragung an einen Rechner, der mit dem besagten Terminal der besagten digitalen Information verbunden ist, die mindestens einem digitalen Benutzeridentifizierer eines Grafikelementes entspricht, das von einem Benutzer durch Aktivierung der Steuertaste bestimmt wird, die mit dem besagten Grafikelement für jede Tabelle verbunden ist;
- eine Unterstufe für den Vergleich, die für den Rechner darin besteht, das besagte Quittierungssignal zu liefern, wenn mindestens ein digitaler Benutzeridentifizierer zum Lernen der besagten digitalen Information entspricht, die an den besagten Rechner übertragen wird.

2. Verfahren gemäß Anspruch 1, bei dem mindestens eine Tabelle 3 x L Grafikelemente umfasst, wobei L zwischen 1 und 5 liegt.

3. Verfahren gemäß Anspruch 1, bei dem mindestens eine Tabelle 3 x L Grafikelemente umfasst, wobei L gleich 3 oder 4 ist.

4. Verfahren gemäß Anspruch 1, bei dem:
die besagte Unterstufe zur Anzeige der besagten Lernstufe eine Stufe umfasst, die in Folgendem besteht:
- Auswahl von N Tabellen, die aus einer Bibliothek mit M Grafikmatrizen stammen, wobei jede Tabelle in P Grafikelemente unterteilt ist, jede Tabelle mit einem Benutzeridentifizierer zum Lernen der Tabelle T₁ verbunden ist und jedes Grafikelement jeder der besagten Tabellen mit einem Benutzeridentifizierer zum Lernen des Grafikelementes M verbunden ist,
bei dem, während der besagten Speicherungsstufe, der besagte digitale Benutzeridentifizierer außerdem durch die besagten Benutzeridentifizierungen zum Lernen der Tabelle T₁ gebildet wird, die mit den besagten Grafikelementen verbunden sind, die während der besagten Unterstufe zur Auswahl eines Grafikcodes ausgewählt werden;
und bei dem die besagte Stufe der Benutzeridentifizierung eine Stufe aufweist, die in Folgendem besteht:
- Anzeige eines Teils P zumindest der besagten N-Tabellen.

5. Verfahren gemäß Anspruch 4, bei dem das besagte P kleiner als N ist.

6. Verfahren gemäß Anspruch 4 oder 5, bei dem die Reihenfolge der Anzeige des besagten Teils P zumindest der besagten N-Tabellen zufallsbedingt ist.

7. Verfahren gemäß einer der vorherigen Ansprüche, bei dem die besagte Unterstufe zur Speicherung der besagten Lernstufe auf einem Server durchgeführt wird, der von dem besagten Steuerterminal sicher entfernt ist, wobei die besagte Unterstufe für den Vergleich ebenfalls im Bereich des besagten Servers durchgeführt wird.
